# EUROPÄISCHE PATENTSCHRIFT

(11) **EP 1 531 066 B1**
(45) Veröffentlichungstag und Bekanntmachung des Hinweises auf die Patenterteilung: **24.08.2011**
(21) Anmeldenummer: 04105487.5
(22) Anmeldetag: 03.11.2004
(51) Int. Cl.: B60G 17/08

(54) **Hydraulischer Schwingungsdämpfer mit einer Einstelleinrichtung für die Dämpfkraft**
Hydraulic damper with damping force adjustment device
Amortisseur hydraulique avec un dispositif de réglage de la force d'amortissement

(30) Priorität: 11.11.2003 DE 10352945
(43) Veröffentlichungstag der Anmeldung: 18.05.2005
(73) Patentinhaber: Bayerische Motoren Werke Aktiengesellschaft, 80809 München (DE)
(72) Erfinder: van der Knaap, Albert, 5706, Kx Helmond (NL); Schouten, Niels Johannes, 5611, KG Eindhoven (NL)

(56) Entgegenhaltungen:
- EP-A2- 0 400 395
- EP-A2- 0 499 183
- DE-A1- 3 609 862
- DE-A1- 19 711 293
- DE-A1- 19 914 504
- DE-C2- 4 417 796
- US-A- 4 854 429

## Beschreibung

Die Erfindung betrifft einen hydraulischen Schwingungsdämpfer für ein Kraftfahrzeug mit einer Einstelleinrichtung für die Dämpfkraft, nach dem Oberbegriff des ersten Anspruchs.

In der DE 44 17 796 C2 wird ein hydraulischer Schwingungsdämpfer mit einstellbarer Dämpfungskraft für Kraftfahrzeuge beschrieben, bei dem ein Dämpfungsventile im Kolben des Schwingungsdämpferzylinders beaufschlagendes Druckmedium im Schwingungsdämpferzylinder zwischen zwei durch den Kolben getrennten Arbeitsräumen überströmen kann. Das Überströmen wird durch Verdrängung von Druckmedium aufgrund von Relativbewegungen des Schwingungsdämpferzylinders zum Kolben verursacht. Außerdem besitzt der Schwingungsdämpfer zusätzlich ein Kanalsystem, durch das ein einstellbarer Übertritt von Druckmedium zwischen den Arbeitsräumen stattfinden kann.

Der Offenbarungsgehalt von DE 44 17 796 C2 wird ausdrücklich in diese Beschreibung miteinbezogen, um eine vollständige Offenbarung der gesamten Schwingungsdämpferfunktionen zu gewährleisten.

Speziell wird in DE 44 17 796 C2 beschrieben, dass dieser hydraulische Schwingungsdämpfer direkt die Dämpfungskraft steuern kann, ohne von der Kolbengeschwindigkeit beeinflusst zu werden, wie dies typischerweise bei einem Druckregelventil der Fall ist. Eine Einstellbarkeit des Schwingungsdämpfers im Voröffnungsbereich wird nicht offenbart.

Eine solche wird in DE 199 14 504 A1 beschrieben. Hier wird im Bereich niedriger Geschwindigkeiten der Kolbengeschwindigkeit eine Dämpfungskraft erzeugt durch eine Hintereinanderschaltung von einem Hilfsplattenventil, einer festen Öffnung und einem Drucksteuerventil, was das Ausmaß der Einstellbarkeit der Dämpfungskraft vergrößert.

Die DE 197 11 293 A1 beschreibt einen hydraulischen Schwingungsdämpfer, der einen zu starken Anstieg der Dämpfungskraft verhindern kann, der durch Filterverstopfung oder eine erhöhte Viskosität des Hydraulikfluids hervorgerufen wird.

Die US 4 854 429 A1 bescheibt einen Dämpfer nach Oberbegriff des Anspruchs 1.

Aufgabe der Erfindung ist es, einen einstellbaren hydraulischen Schwingungsdämpfer bereitzustellen, dessen Kennung auch im Voröffnungsbereich eingestellt werden kann, ohne bei höheren Dämpfergeschwindigkeiten zu Progression in den Kennlinien zu führen.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung besitzt ein hydraulischer Schwingungsdämpfer für ein Kraftfahrzeug mindestens eine Dämpfkrafteinstelleinrichtung für die Zug-und/oder die Druckstufe, mindestens bestehend aus einer Hydraulikschaltung in einem Überströmkanal für ein hydraulisches Druckmedium zwischen durch mindestens einen Kolben getrennten Arbeitskammern des Schwingungsdämpfers oder zwischen einer der Arbeitskammern und einer Ausgleichseinrichtung. Dabei umfasst die Hydraulikschaltung mindestens eine Verstellventileinrichtung aus einem als Messblende, vorzugsweise mit linearer Kennung, wirkenden hydraulischen Widerstand und einem eine Druckdifferenz an der Messblende abgreifenden Druckregelventil. Dem hydraulischen Widerstand ist ein durch einen Aktuator ansteuerbares Drosselverstellventil in Reihe geschaltet und der vom Druckregelventil gesteuerte Hauptvolumenstrom zum Drosselverstellventil und zum hydraulischen Widerstand ist parallel geführt. Die Erfindung ist dadurch gekennzeichnet, dass weiterhin parallel zur Verstellventileinrichtung ein weiterer hydraulischer widerstand geschaltet ist und der Verstellventileinrichtung und dem weiteren hydraulischen widerstand nach ein Druckregelventil parralel geschaltet ist. Eine solche Hydraulikschaltung hat den Vorteil, dass die Kennung des einstellbaren hydraulischen Schwingungsdämpfers auch im Voröffnungsbereich eingestellt werden kann. Und dies vorteilhafterweise, ohne dass bei größerem Durchflussvolumen die Druckdifferenz zwischen den Arbeitskammern progressiv ansteigt.

Eine vorteilhafte Ausführung der Erfindung sieht vor, dass die Hydraulikschaltung der Dämpfkrafteinstelleinrichtung für die Zugstufe im Anschluss an die kolbenstangenseitige Arbeitskammer in den Überströmkanal eingeschaltet ist, der in seinem weiteren Verlauf mindestens an eine Aus-gleichseinrichtung für die Hydraulikflüssigkeit angeschlossen ist und danach über ein erstes, zur Ausgleichseinrichtung hin sperrendes, Rückschlagventil zu der kolbenseitigen Arbeitskammer geführt ist.

Entsprechend ist für die Druckstufe die Hydraulikschaltung der Dämpfkrafteinstelleinrichtung im Anschluss an die kolbenseitige Arbeitskammer in den Überströmkanal eingeschaltet, der in seinem weiteren Verlauf mindestens an eine Ausgleichseinrichtung für die Hydraulikflüssigkeit angeschlossen ist und danach über ein zweites, zur Ausgleichseinrichtung hin sperrendes, Rückschlagventil zu der kolbenstangenseitigen Arbeitskammer geführt ist.

Eine weitere, alternative vorteilhafte Ausführung der Erfindung sieht vor, dass die Hydraulikschaltung der Dämpfkrafteinstelleinrichtung für die Zugstufe im Anschluss an die kolbenstangenseitige Arbeitskammer in den Überströmkanal eingeschaltet ist, der in seinem weiteren Verlauf zu der kolbenseitigen Arbeitskammer geführt ist und dass die kolbenseitige Arbeitskammer über das erste, zur Ausgleichseinrichtung hin sperrende, Rückschlagventil mit der Ausgleichseinrichtung für die Hydraulikflüssigkeit verbunden ist.

Entsprechend ist hier für die Druckstufe die Hydraulikschaltung der Dämpfkrafteinstelleinrichtung im Anschluss an die kolbenseitige Arbeitskammer an die Ausgleichseinrichtung für die Hydraulikflüssigkeit angeschlossen. Außerdem ist die kolbenseitige Arbeitskammer über ein zweites, zu dieser hin sperrendes, Rückschlagventil zu der kolbenstangenseitigen Arbeitskammer geführt.

Die erfindungsgemäße Hydraulikschaltung hat den Vorteil, dass die Kennlinienschar der einstellbaren Kraft-/Wegkennlinien (bzw. der vom Verlauf her entsprechenden Druckdifferenz-/Durchflusskennlinien) des Schwingungsdämpfers im Voröffnungsbereich mehr aufgefächert wird. Und dies vorteilhafterweise, ohne dass bei größerem Durchflussvolumen die Druckdifferenz zwischen den Arbeitskammern progressiv ansteigt. Die Zugist von der Druckstufe unabhängig verstellbar und umgekehrt. Die Art der Verschaltung vermeidet Kavitation im Arbeitsraum. Durch die Hydraulikschaltung wird die Regelcharakteristik des Schwingungsdämpfers vorteilhafterweise optimiert.

Zwei bevorzugte Ausführungsbeispiele der Erfindung sind in der nachfolgenden Beschreibung und der zugehörigen Zeichnung näher dargestellt. Es zeigen:
- Figur 1:: eine schematische Prinzipskizze mit Hydraulikschaltplan eines erfindungsgemäßen Schwingungsdämpfers,
- Figur 2:: eine Kennlinienschar für einen erfindungsgemäßen Schwingungsdämpfer entsprechend Figur 1 oder Figur 3, in der die Druckdifferenz aufgetragen ist über der Durchflussmenge und
- Figur 3:: eine schematische Prinzipskizze mit vereinfacht dargestelltem Hydraulikschaltplan einer alternativen Ausführungsform eines erfindungsgemäßen Schwingungsdämpfers.

Auch die Beschreibung des Ausführungsbeispiels soll die Offenbarung von DE 44 17 796 C2 mit einschließen. Dort ist der Aufbau und die Funktion eines hydraulischen Schwingungsdämpfers mit einstellbarer Dämpfungskraft beschrieben. Die dort beschriebene Hydraulikschaltung wird ersetzt durch die hier in den Ausführungsbeispielen beschriebene. Weitere in DE 44 17 796 C2 beschriebene, bekannte Bauteile eines hydraulischen Schwingungsdämpfers kommen in dieser Erfindung ebenfalls zur Anwendung und gehören zum Offenbarungsumfang.

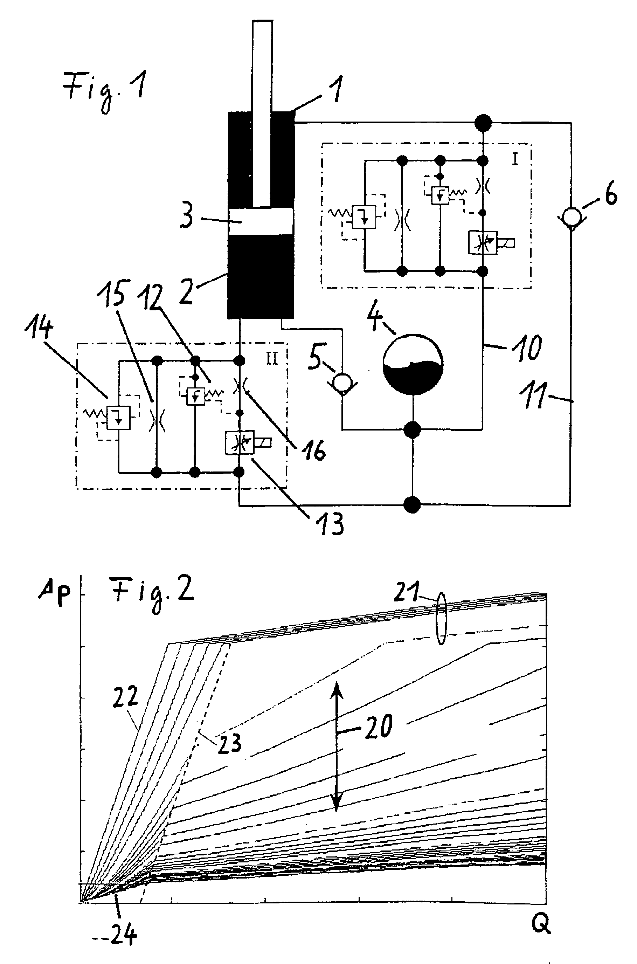

Ein hydraulischer Schwingungsdämpfer für ein Kraftfahrzeug, wie in Figur 1 dargestellt, besitzt je eine Dämpfkrafteinstelleinrichtung I, II für die Zug- und die Druckstufe. Diese besteht jeweils aus einer Hydraulikschaltung, dargestellt als Schaltplan, jeweils eingeschaltet in einen Überströmkanal 10, 11 für ein hydraulisches Druckmedium zwischen durch mindestens einen Kolben 3 getrennten Arbeitskammern 1, 2 des Schwingungsdämpfers. Die Hydraulikschaltung umfasst eine Verstellventileinrichtung aus einem als Messblende, vorzugsweise mit linearer Kennung, wirkenden hydraulischen Widerstand 16 und einem eine Druckdifferenz an der Messblende abgreifenden Druckregelventil 12. Dem hydraulischen Widerstand 16 ist ein durch einen nicht gezeichneten Aktuator ansteuerbares Drosselverstellventil 13 in Reihe geschaltet und der vom Druckregelventil 12 gesteuerte Hauptvolumenstrom ist zum Drosselverstellventil 13 und zum hydraulischen Widerstand 16 parallel geführt.

Zusätzlich zu diesem für die Erfindung minimal nötigen Schaltungsumfang für die Dämpfkrafteinstelleinrichtungen I, II, ist der Verstellventileinrichtung noch jeweils ein Druckbegrenzungsventil 14 und ein weiterer hydraulischer Widerstand 15 parallel geschaltet.

Die Hydraulikschaltung der Dämpfkrafteinstelleinrichtung I für die Zugstufe ist im Anschluss an die kolbenstangenseitige Arbeitskammer 1 in den Überströmkanal 10 eingeschaltet, der in seinem weiterem Verlauf an eine Ausgleichseinrichtung 4 für die Hydraulikflüssigkeit angeschlossen ist und der danach über ein erstes, zur Ausgleichseinrichtung 4 hin sperrendes, Rückschlagventil 5 zu der kolbenseitigen Arbeitskammer 2 geführt ist.

Dagegen ist die Hydraulikschaltung der Dämpfkrafteinsteiieinrichtung II für die Druckstufe im Anschluss an die kolbenseitige Arbeitskammer 2 in den Überströmkanal 11 eingeschaltet, der in seinem weiteren Verlauf ebenfalls an die Ausgleichseinrichtung 4 für die Hydraulikflüssigkeit angeschlossen ist. Danach ist in den Überströmkanal 11 ein zweites, zur Ausgleichseinrichtung 4 hin sperrendes, Rückschlagventil 6 eingebaut und der Überströmkanal 11 ist zu der kolbenstangenseitigen Arbeitskammer 1 hingeführt.

In Figur 2 ist eine Kennlinienschar eines erfindungsgemäßen hydraulischen Schwingungsdämpfers entsprechend Figur 1 dargestellt. Es ist die Druckdifferenz delta p über der Durchflussmenge Q aufgetragen. Dabei wird mit dem Doppelpfeil 20 die Variationsbreite einer erfindungsgemäßen Dämpfkrafteinstelleinrichtung I, II symbolisch angedeutet dargestellt, wobei die Ellipse 21 symbolisch den Einflussbereich des Druckbegrenzungsventils 14 auf die Kennlinienvariation kennzeichnet. Der im wesentlichen lineare, steile Anstieg der Kennlinie 22 entsteht durch den Einfluss des weiteren hydraulischen Widerstands 15, während der der Fläche eines Parallelogramms mit den Grundseiten 22, 23 ähnliche Bereich durch die Eigenschaften des Drosselverstellventils 13 und des hydraulischen Widerstands 16 beeinflusst wird. In diesem Bereich zwischen den Parallelogrammgrundseiten 22, 23 ist das Druckregelventil 12 geschlossen. Im Bereich des Doppelpfeils 20, rechts von der Grundseite 23, ist das Druckregelventil 12 geöffnet. Es wirken dessen Verschaltung mit dem Drosselverstellventil 13 und dem hydraulischen Widerstand 16 als Stromregelventil, wodurch die Druckdifferenz delta p zwischen den Arbeitskammern 1, 2 nicht progressiv ansteigt.

Aus dem Diagramm ist zu entnehmen, dass die Kennung des einstellbaren hydraulischen Schwingungsdämpfers auch im Voröffnungsbereich 24 günstig eingestellt werden kann, da hier die Kennlinienschar der einstellbaren Kraft-/Wegkennlinien (bzw. der vom Verlauf her entsprechenden Druckdifferenz-/Durchflusskennlinien) des Schwingungsdämpfers mehr aufgefächert wird.

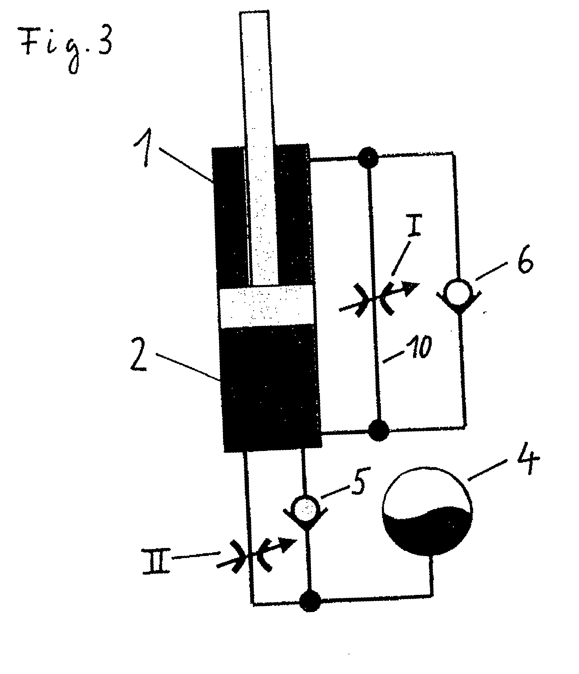

Die Figur 3 zeigt, in einem vereinfacht dargestellten Hydraulikschaltplan, eine alternative Ausführungsform des erfindungsgemäßen Schwingungsdämpfers. Die Hydraulikschaltung der Dämpfkrafteinstelleinrichtung I für die Zugstufe, bestehend aus den in der Beschreibung zu Figur 1 beschriebenen Elementen und hier vereinfacht als Drosselverstellventil dargestellt, ist im Anschluss an die kolbenstangenseitige Arbeitskammer 1 in den Überströmkanal 10 eingeschaltet. Dieser ist in seinem weiteren Verlauf zu der kolbenseitigen Arbeitskammer 2 geführt. Des weiteren ist die kolbenseitige Arbeitskammer 2 über das erste, zur Ausgleichseinrichtung 4 hin sperrende, Rückschlagventil 5 mit der Ausgleichseinrichtung 4 für die Hydraulikflüssigkeit verbunden.

Entsprechend ist die Hydraulikschaltung der Dämpfkrafteinstelleinrichtung II für die Druckstufe, ebenso bestehend aus den in der Beschreibung zu Figur 1 beschriebenen Elementen und hier vereinfacht als Drosselverstellventil dargestellt, im Anschluss an die kolbenseitige Arbeitskammer 2 mit der Ausgleichseinrichtung 4 für die Hydraulikflüssigkeit verbunden. Während die kolbenseitige Arbeitskammer 2 über ein zweites, zur kolbenseitigen Arbeitskammer 2 hin sperrendes, Rückschlagventil 6 zu der kolbenstangenseitigen Arbeitskammer 1 geführt ist.

## Patentansprüche

1. Hydraulischer Schwingungsdämpfer für ein Kraftfahrzeug, mit einer Dämpfkrafteinstelleinrichtung (I, II) für die Zug- und/oder die Druckstufe, mindestens bestehend aus einer Hydraulikschaltung in einem Überströmkanal (10, 11) für ein hydraulisches Druckmedium zwischen durch mindestens einen Kolben (3) getrennten Arbeitskammern (1, 2) des Schwingungsdämpfers oder zwischen einer der Arbeitskammern (1, 2) und einer Ausgleichseinrichtung (4), wobei die Hydraulikschaltung mindestens eine Verstellventileinrichtung aus einem als Messblende, vorzugsweise mit linearer Kennung, wirkenden hydraulischen Widerstand (16) und einem eine Druckdifferenz an der Messblende abgreifenden Druckregelventil (12) umfasst, wobei dem hydraulischen Widerstand (16) ein durch einen Aktuator ansteuerbares Drosselverstellventil (13) in Reihe geschaltet ist und wobei der vom Druckregelventil (12) gesteuerte Hauptvolumenstrom zum Drosselverstellventil (13) und zum hydraulischen Widerstand (16) parallel geführt ist, **dadurch gekennzeichnet, dass** weiterhin parallel zur Verstellventileinrichtung ein weiterer hydraulischer Widerstand (15) geschaltet ist und der Verstellventileinrichtung und dem weiteren hydraulischen Widerstand (15) noch ein Druckregelventil (14) parallel geschaltet ist.

2. Hydraulischer Schwingungsdämpfer nach Anspruch 1, **dadurch gekennzeichnet, dass** die Hydraulikschaltung der Dämpfkrafteinstelleinrichtung (I) für die Zugstufe im Anschluss an die kolbenstangenseitige Arbeitskammer (1) in den Überströmkanal (10) eingeschaltet ist, der in seinem weiteren Verlauf mindestens an eine Ausgleichseinrichtung (4) für die Hydraulikflüssigkeit angeschlossen ist und danach über ein erstes, zur Ausgleichseinrichtung (4) hin sperrendes, Rückschlagventil (5) zu der kolbenseitigen Arbeitskammer (2) geführt ist.

3. Hydraulischer Schwingungsdämpfer, nach einem der Ansprüche 1 bis 2 **dadurch gekennzeichnet, dass** die Hydraulikschaltung der Dämpfkrafteinstelleinrichtung (II) für die Druckstufe im Anschluss an die kolbenseitige Arbeitskammer (2) in den Überströmkanal (11) eingeschaltet ist, der in seinem weiteren Verlauf mindestens an eine Ausgleichseinrichtung (4) für die Hydraulikflüssigkeit angeschlossen ist und danach über ein zweites, zur Ausgleichseinrichtung (4) hin superrendes, Rückschlagventil (6) zu der kolbenstangenseitigen Arbeitskammer (1) geführt ist.

4. Hydraulischer Schwingungsdämpfer nach Anspruch 1, **dadurch gekennzeichnet, dass** die Hydraulikschaltung der Dämpfkrafteinstelleinrichtung (I) für die Zugstufe im Anschluss an die kolbenstangenseitige Arbeitskammer (1) in den Überströmkanal (10) eingeschaltet ist, der in seinem weiteren Verlauf zu der kolbenseitigen Arbeitskammer (2) geführt ist und dass die kolbenseitige Arbeitskammer (2) über das erste, zur Ausgleichseinrichtung (4) hin sperrende, Rückschlagventil (5) mit der Ausgleichseinrichtung (4) für die Hydraulikflüssigkeit verbunden ist.

5. Hydraulischer Schwingungsdämpfer nach einem der Ansprüche 1 oder 4, **dadurch gekennzeichnet, dass** die Hydraulikschaltung der Dämpfkrafteinstelleinrichtung (II) für die Druckstufe im Anschluss an die kolbenseitige Arbeitskammer (2) an eine Ausgleichseinrichtung (4) für die Hydraulikflüssigkeit angeschlossen ist und dass die kolbenseitige Arbeitskammer (2) über ein zweites, zur kolbenseitigen Arbeitskammer (2) hin sperrendes, Rückschlagventil (6) zu der kolbenstangenseitigen Arbeitskammer (1) geführt ist.

## Claims

1. An hydraulic vibration damper for a motor vehicle, with a damping force adjustment device (I, II) for the pulling and/or the pressure stage, at least comprising a hydraulic circuit in an overflow channel (10, 11) for a hydraulic pressure medium between working chambers (1, 2), which are separated by at least one piston (3), of the vibration damper or between one of the working chambers (1, 2) and a compensating device (4), wherein the hydraulic circuit comprises at least one adjusting valve device comprising a hydraulic resistor (16) acting as an orifice gauge, preferably with a linear characteristic, and a pressure control valve (12) picking up a pressure difference at the orifice gauge, a throttle adjusting valve (13), which can be actuated by an actuator, being connected in series with the hydraulic resistor (16) and the main volume flow controlled by the pressure control valve (12) being guided in parallel to the throttle adjusting valve (13) and to the hydraulic resistor (16), **characterised in that** a further hydraulic resistor (15) is furthermore connected in parallel to the adjusting valve device and a pressure control valve (14) is also connected in parallel to the adjusting valve device and the further hydraulic resistor (15).

2. An hydraulic vibration damper according to claim 1, **characterised in that** the hydraulic circuit of the damping force adjusting device (I) for the pulling stage is connected, following the piston rod-side working chamber (1), into the overflow channel (10), which, in its further course, is connected at least to a compensating device (4) for the hydraulic fluid and thereafter is guided by a first check valve (5) blocking toward the compensating device (4), to the piston-side working chamber (2).

3. An hydraulic vibration damper according to either of claims 1 or 2, **characterised in that** the hydraulic circuit of the damping force adjusting device (II) for the pressure stage, following the piston-side working chamber (2), is connected into the overflow channel (11), which, in its further course, is connected at least to a compensating device (4) for the hydraulic fluid and, thereafter, is guided by a second check valve (6) blocking toward the compensating device (4), to the piston rod-side working chamber (1).

4. An hydraulic vibration damper according to claim 1, **characterised in that** the hydraulic circuit of the damping force adjusting device (I), for the pulling stage, following the piston rod-side working chamber (1), is connected into the overflow channel (10), which is guided, in its further course, to the piston-side working chamber (2), and **in that** the piston-side working chamber (2) is connected by the first check valve (5) blocking toward the compensating device (4), to the compensating device (4) for the hydraulic fluid.

5. An hydraulic vibration damper according to either of claims 1 or 4, **characterised in that** the hydraulic circuit of the damping force adjusting device (II) for the pressure stage, following the piston-side working chamber (2), is connected to a compensating device (4) for the hydraulic fluid and **in that** the piston-side working chamber (2) is guided by a second check valve (6) blocking toward the piston-side working chamber (2), to the piston rod-side working chamber (1).

## Revendications

1. Amortisseur hydraulique de véhicule automobile comportant une installation de réglage de la force d'amortissement (I, II) pour l'étage de traction et/ou l'étage de compression, composée d'au moins un circuit hydraulique dans un canal de débordement (10, 11) pour un agent hydraulique entre des chambres de travail (1, 2) de l'amortisseur, séparées par au moins un piston (3) ou entre l'une des chambres de travail (1, 2) et une installation d'équilibrage (4),
- le circuit hydraulique se composant d'au moins une installation de soupape de réglage constituée d'une résistance hydraulique (16) sous la forme d'un diaphragme de mesure avec, de préférence, une caractéristique linéaire et d'une soupape de régulation de pression (12) prenant la différence de pression au niveau du diaphragme,
- une soupape de réglage d'étranglement (13) commandée par un actionneur, étant branchée en série avec la résistance hydraulique (16),
- le débit volumique principal commandé par la soupape de régulation de pression (12) étant en parallèle avec la soupape de réglage d'étranglement (13) et avec la résistance hydraulique (16), amortisseur **caractérisé en ce qu'**
en outre, une autre résistance hydraulique (15) est branchée en parallèle à l'installation de réglage et une soupape de réglage de pression (14) est branchée en parallèle à l'installation de soupape de réglage et à l'autre résistance hydraulique (15).

2. Amortisseur hydraulique selon la revendication 1,
**caractérisé en ce que**
le circuit hydraulique de l'installation de réglage de la force d'amortissement (I) pour l'étage de traction, est branché à la suite de la chambre de travail (1), côté tige de piston, dans le canal de débordement (10) qui en aval, est relié à au moins une installation d'équilibrage (4) du liquide hydraulique et ensuite par un premier clapet antiretour (5) bloqué vers l'installation d'équilibrage (4), pour arriver dans la chambre de travail (2), côté piston.

3. Amortisseur hydraulique selon l'une des revendications 1 et 2,
**caractérisé en ce que**
le circuit hydraulique de l'installation de réglage de la force d'amortissement (II), est branché dans le canal de débordement (11) pour l'étage de pression à la suite de la chambre de travail (2), côté piston, et dans la suite de son tracé, le canal est relié à au moins une installation d'équilibrage (4) pour le liquide hydraulique et ensuite, par un second clapet antiretour (6), il est bloqué en direction de l'installation d'équilibrage (4), pour arriver à la chambre de travail (1), côté tige de piston.

4. Amortisseur hydraulique selon la revendication 1,
**caractérisé en ce que**
le circuit hydraulique de l'installation de réglage de la force d'amortissement (I), est mis en oeuvre pour l'étage de traction en étant raccordé à la chambre de travail (1), côté tige de piston, dans le canal de débordement (10), et qui en aval arrive dans la chambre de travail, côté piston (2), et
la chambre de travail (2), côté piston, est reliée à l'installation d'équilibrage (4) par l'intermédiaire du premier clapet antiretour (5) qui se ferme en direction de l'installation d'équilibrage (4), pour être relié à l'installation d'équilibrage (4) pour le liquide hydraulique.

5. Amortisseur hydraulique selon l'une des revendications 1 ou 4,
**caractérisé en ce que**
le circuit hydraulique de l'installation de réglage de la force d'amortissement (II) pour l'étage de pression, à la suite de la chambre de travail (2), côté piston est relié à l'installation d'équilibrage (4) pour le liquide hydraulique, et
la chambre de travail, côté piston (2), est reliée par un second clapet antiretour (6) qui se ferme en direction de la chambre de travail (2), à la chambre de travail (1), côté tige de pison.
